# EUROPÄISCHE PATENTANMELDUNG

(11) **EP 0 892 243 A2**
(43) Veröffentlichungstag der Anmeldung: **20.01.1999**
(21) Anmeldenummer: 98111328.5
(22) Anmeldetag: 19.06.1998
(51) Int. Cl.: G01B 5/255

(54) **Adapter zum Befestigen wenigstens einer Messeinrichtung oder wenigstens eines zu einer Messeinrichtung gehörigen Messelementes an einem Fahrzeugrad**

(30) Priorität: 16.07.1997 DE 19730523
(71) Anmelder: HOFMANN WERKSTATT-TECHNIK GMBH, D-64319 Pfungstadt (DE)
(72) Erfinder: Boess, Walter, 68649 Gross-Rohrheim (DE)
(74) Vertreter: Nöth, Heinz, Dipl.-Phys.

(57) **Zusammenfassung**

Ein Adapter zum Befestigen wenigstens einer Meßeinrichtung oder wenigstens eines zu einer Meßeinrichtung gehörigen Meßelementes an einem Kraftfahrzeugrad insbesondere bei der Radstellungsmessung, bei dem ein Träger (1) mit Hilfe von verschiebbar gegenüber dem Träger (1) gelagerten Befestigungsmitteln beim Verschieben dieser Befestigungsmittel am Kraftfahrzeugrad zentriert wird.

## Beschreibung

Die Erfindung betrifft einen Adapter nach dem Oberbegriff des Patentanspruches 1.

Ein derartiger Adapter ist zum Befestigen einer Meßeinrichtung oder eines zu einer Meßeinrichtung gehörigen Meßelements an einem Kraftfahrzeugrad, insbesondere zur Messung der Radstellung aus der US 5,446,967 bekannt. Hierzu wird ein Träger verwendet, an welchem die Meßeinrichtung, beispielsweise eine Winkelmeßeinrichtung, befestigt ist, mit Hilfe von Befestigungsmitteln am Kraftfahrzeugrad so befestigt, daß die Meßeinrichtung oder ein Meßelement einen bestimmten Lagebezug zur Radachse hat. Die Befestigungsmittel sind in radialen Richtungen am Träger geführt. Durch gemeinsame Bewegung der Befestigungsmittel können diese zur Erzeugung von den Trägern bezüglich der Radachse zentrierenden Reaktionskräften am Scheibenrad festspannbar sein. Hierzu sind die Befestiungsmittel mit Formschluß auf Schraubköpfen von Befestigungsschrauben, mit denen das Kraftfahrzeugrad am Fahrzeug befestigt ist, aufsetzbar.

Aus der DE 92 06 155 U1 ist ebenfalls eine Befestigungsvorrichtung für Meßgeräte an Kraftfahrzeugrädern bekannt, bei welcher mehrere Klemmhülsen auf die Radmuttern oder Radschrauben als Befestigungsmittel fest aufsetzbar sind. Die Klemmhülsen sind an der Befestigungsvorrichtung in radialer Richtung beweglich geführt, wobei alle Klemmhülsen auf einen einheitlichen radialen Abstand vom Mittelpunkt der Befestigungsvorrichtung, wie bei der aus der US 5,446,967 bekannten Vorrichtung eingestellt werden.

Ferner ist es aus der DE 44 12 196 A1 bekannt, am Träger des Adapters verdreh- und verkippbar gelagerte Befestigungsmittel vorzusehen, mit denen der Träger am Scheibenrad des Fahrzeugrades zu befestigen ist. Die Befestigungsmittel sind dabei mittels einer gegenüber dem Träger bewegbaren Führungseinrichtung in zu radialen Richtungen senkrecht verlaufenden Richtungen verdrehbar geführt.

Aufgabe der Erfindung ist es, einen Adapter der eingangs genannten Art zu schaffen, mit welchem bei einfacher Handhabung der gewünschte Lagebezug zwischen Meßeinrichtung bzw. Meßelement und Radachse beim Befestigen des Adapters am Kraftfahrzeugrad erreicht wird.

Diese Aufgabe wird erfindungsgemäß durch das kennzeichnende Merkmal des Patentanspruches 1 gelöst.

Bei der Erfindung werden die Befestigungsmittel, welche als am Scheibenrad oder in bevorzugter Weise an Schraubköpfen von Befestigungsschrauben, mit welchen das Kraftfahrzeugrad am Fahrzeug befestigt ist, abstützbar sind, mittels einer gegenüber dem Träger bewegbaren, bevorzugterweise um die mit der Radachse ausrichtbaren Achse drehbaren Führungseinrichtung in zur radialen Richtung im Winkel verlaufenden Richtungen am Träger verschiebbar geführt. Bei der gemeinsamen Bewegung der Bewegungsmittel, welche durch die Führungseinrichtung oder ein zur Führungseinrichtung gehöriges Betätigungsteil bewirkt wird, werden zur Zentrierung des Trägers bezüglich der Radachse bzw. zur Ausrichtung der Achse des Trägers mit der Radachse die Befestigungsmittel am Scheibenrad festgespannt. Dabei kommen radiale Kraftkomponenten zur Zentrierung des Trägers an den Abstützstellen der Befestigungsmittel am Scheibenrad insbesondere an den Schraubköpfen der Befestiungsschrauben zur Wirkung. Hierdurch wird eine selbsttätige Ausrichtung des Trägers insbesondere der daran befestigten Meßeinrichtung bzw. des daran befestigten Meßelements gegenüber der Radachse erreicht. Die Drehung der Führungseinrichtung oder des zu ihr gehörigen Betätigungsteiles kann von Hand durch die Serviceperson ausgeführt werden. Die mit den oben beschriebenen Eigenschaften ausgestattete Führungseinrichtung wandelt die von Hand bewirkte Bewebung insbesondere Drehung beispielsweise des Betätigungsteiles so um, daß die gewünschte Zentrierung bezüglich der Radachse erzielt wird.

Die Befestigungsmittel, welche beispielsweise mit Formschluß auf die Schraubköpfe der Befestigungsschrauben aufsetzbar sind oder mit Formschluß an geeigneten Stellen des Scheibenrades angreifen, können durch das Betätigungsteil gleichzeitig mit Hilfe separater, dem jeweiligen Befestigungsmittel zugeordneten Führungsmittel, wie Führungsschlitze oder Führungshebel auf separaten Bahnen in der Führungseinrichtung bewegt werden. Da die Befestigungsmittel in unterschiedlichen Winkelpositionen um die mit der Radachse ausrichtbaren Achse angeordnet sind, ergibt sich eine selbsttätige Ausrichtung des Trägers und damit der Meßeinrichtung bzw. des Meßelements gegenüber der Radachse. In bevorzugter Weise sind die Befestigungsmittel auf einem Kreis in gleichen Winkelabständen voneinander um die mit der Radachse ausrichtbare Achse angeordnet.

Die Führungseinrichtung kann in der Weise ausgebildet sein, daß sie ein bevorzugt als Scheibe ausgebildetes Betätigungsteil aufweist, das schräg zu den radialen Richtungen verlaufende Führungsschlitze aufweist, in denen die Befestigungsmittel verschiebbar geführt sind. Die Führungsschlitze können geradlinig oder bogenförmig ausgebildet sein. Bei der Drehung des Betätigungsteiles werden die Befestigungsmittel in den Führungsschlitzen gleitend mit geringer Reibung geführt, so daß die gewünschte Verspannung am Scheibenrad bzw. den Schraubköpfen der Befestigungsschrauben mit radialen Kraftkomponenten an den Abstützstellen erfolgt.

Bei einem weiteren Ausführungsbeispiel ist das bevorzugt drehbare Betätigungsteil um Anlenkstellen mit den Befestigungsmitteln, die um Schwenkachsen jeweils am Träger gelagert sind, verbunden. Beim Verdrehen des Betätigungsteiles und die mit der Radachse ausrichtbare Achse werden die Befestigungsmittel verschwenkt, bis sie den oben schon erläuterten gespannten Zustand für die Zentrierung des Trägers bzw. der Meßeinrichtung und des Meßelementes einnehmen. Hierzu können die Befestigungsmittel auf um die Schwenkachsen schwenkbaren Hebeln befestigt sein.

Zum Auswechseln der Befestigungsmittel können diese in ihren Befestigungsstellen am Träger lösbar vorgesehen sein. Die Befestigungsmittel, welche mit den Schraubköpfen der Befestigungsschrauben in Eingriff gebracht werden, können in Form von auf die Schraubköpfe aufsetzbaren Nüssen ausgebildet sein.

Anhand der Figuren wird an Ausführungsbeispielen die Erfindung noch näher erläutert. Es zeigt:
- Fig. 1: ein erstes Ausführungsbeispiel in perspektivischer Darstellung;
- Fig. 2: in perspektivischer vergrößerter Darstellung ein bei den Ausführungsbeispielen verwendetes Befestigungsmittel; und
- Fig. 3: ein weiteres Ausführungsbeispiel der Erfindung.

Die Ausführungsbeispiele besitzen einen Träger 1, an welchem in bekannter Weise eine Meßeinrichtung oder eines oder mehrere Meßelemente insbesondere zur Messung der Radstellung eines nicht näher dargestellten Kraftfahrzeugrades befestigt werden können. Der Träger 1 ist Teil eines Adapters, welcher eine Achse 9 aufweist, die mit einer Radachse des zu messenden Kraftfahrzeugrades für die Durchführung der Messung ausgerichtet werden kann.

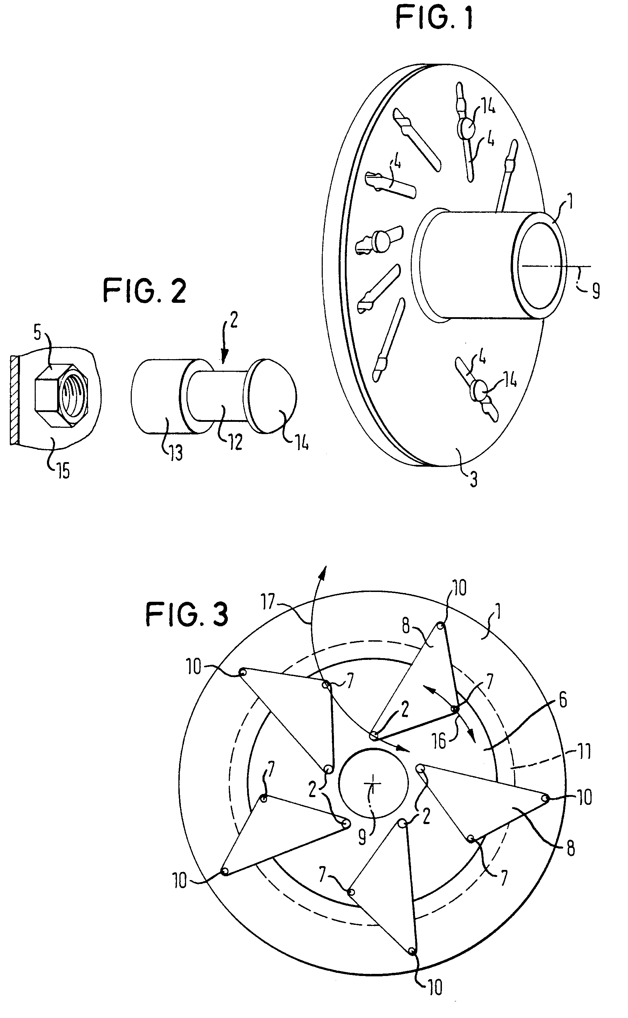

Am Träger 1 ist beim Ausführungsbeispiel der Fig. 1 ein scheibenförmiges Betätigungsteil 3 vorgesehen. Das Betätigungsteil 3 besitzt Führungsschlitze, welche zu bezüglich der Achse 9 radialen Richtungen im Winkel angeordnet sind, d.h. die Führungsschlitze 4 verlaufen abweichend von den zur Achse 9 radialen Richtungen. Die Führungsschlitze 4 können geradlinig oder gebogen ausgebildet sein, wobei bei den gebogenen Führungsschlitzen der Schlitzverlauf in der Nähe der äußeren Enden den jeweiligen Tangenten eines Kreises um die Achse 9 angenähert sind und in ihrem an den inneren Enden benachbarten Verlauf den jeweiligen radialen Richtungen angenähert sind.

In den Führungsschlitzen sind Befestigungsmittel 2 geführt, von denen in der Fig. 2 in vergrößerter Darstellung ein Befestigungsmittel gezeigt ist. Das Befestigungsmittel 2 besitzt einen auf einen Schraubkopf 5 formschlüssig aufsetzbares Steckteil 13, welches wie eine Nuß in herkömmlicher Weise ausgebildet sein kann. Ferner besitzt das Befestigungsmittel 2 einen Schaft 12, welcher für eine reibungsarme Bewegung in einen der Führungsschlitze 4 eingesetzt ist. An dem dem Steckteil 13 entgegengesetzten Enden befindet sich ein Sicherungsteil 14, durch welches das Befestigungsmittel in axialer Richtung im jeweiligen Führungsschlitz 4 gesichert ist. In Abhängigkeit von den Stellen, an denen die Schraubköpfe 5 der Befestigungsschrauben, mit welchen ein Kraftfahrzeugrad 15 am Fahrzeug befestigt ist, liegen, können entsprechende Führungsschlitze 4 in dem scheibenförmigen Betätigungsteil 3 für das Einsetzen der Befestigungsmittel 2 gewählt werden.

Das Betätigungsteil 3 mit den Führungsschlitzen 4 bildet eine Führungseinrichtung für die Befestigungsmittel 2. Beim Drehen der Scheibe 3 werden die auf die Schraubköpfe aufgesetzten Befestigungsmittel 2 entlang der Führungsschlitze 4 geführt. Bei dieser Drehung um die Achse 9 stützt sich die Scheibe 3 und der an ihr starr oder drehbar befestigte Träger 1 an den an den Schraubköpfen 5 oder anderen geeigneten Abstützstellen befestigten bzw. abgestützten Befestigungsmitteln 2 ab. Hierbei kommt eine radiale Reaktionskraftkomponente zur Wirkung, welche aufgrund der mit gleichen Winkelabständen verteilten Befestigungsmittel 2 eine Ausrichtung der Achse 9, welche beim Ausführungsbeispiel die Träger- bzw. Adapterachse ist, mit der Radachse des Kraftfahrzeugrades bewirkt.

Wie schon erläutert, können die Befestigungsmittel 2 auch an anderen geeigneten Stellen des Scheibenrades als den Schraubköpfen 5 bei der Ausrichtung der Achse 9 mit der Radachse abgestützt sein, um bei der Drehung des scheibenförmigen Betätigungsteiles 3 die zur Ausrichtung der Achse 9 erforderlichen radial gerichteten Reaktionskraftkomponenten, welche gleiche Winkelabstände voneinander aufweisen, zu erzeugen. Diese Kraftkomponenten resultieren aus dem Verlauf der Führungsschlitze 4, welche gegenüber der jeweiligen radialen Richtungen bezüglich der Achse 9 einen Winkel einschließen.

Bei dem in der Fig. 3 dargestellten Ausführungsbeispiel sind die Befestigungsmittel 2 um Schwenkachsen 10 schwenkbar am Träger 1 gelagert. Der Träger 1 kann hierzu ein ringförmiges Teil aufweisen, an welchem die Schwenkachsen 10 bevorzugt auf einem Kreis um die Achse 9 angeordnet sind. Das ringförmige Trägerteil kann an seiner Innenseite eine Ringlagerung 11 aufweisen, in welcher ein ringförmiges Betätigungsteil 6 drehbar um die Achse 9 gelagert ist. Am drehbaren Betätigungsteil 6 befinden sich Anlenkstellen 7, über welche das Betätigungsteil 6 mit starren Hebeln 8, an welchen die Befestigungsmittel 2 schwenkbar um die Schwenkachsen 10 gelagert sind, verbunden ist. Beim Drehen des Betätigungsteiles 6 wird diese Drehbewegung über die Anlenkstellen 7 auf die Hebel 8 übertragen. Die jeweilige Anlenkstelle 7, z.B. ein Stift, ist beim Ausführungsbeispiel fest mit dem Betätigungsteil 6 verbunden und dreht sich um die Achse 9 mit (Doppelpfeil 16). Am Hebel 8 ist eine entsprechende Führung, in welcher die Anlenkstelle 7 gleitend geführt ist, vorgesehen. Es ist auch möglich, die Anlenkstelle 7 mit dem jeweiligen Hebel 8 fest zu verbinden und am Betätigungsteil 6 eine entsprechende Gleitführung vorzusehen. Die Hebel 8 schwenken um die Schwenkachsen 10, welche am Träger 1 abgestützt sind, so daß die Befestigungsmittel 2 und die Schwenkachsen 10 entsprechend der Drehung des Betätigungsteils 6 geschwenkt werden (Doppelpfeil 17). Die Befestigungsmittel 2 können wie schon erläutert am Scheibenrad des Kraftfahrzeugrades 15 an geeigneten Stellen, z.B. am Scheibenradumfang, abgestützt werden. Es ist jedoch auch möglich, die Befestigungsmittel 2, wie es in der Fig. 2 erläutert ist, an den Schraubköpfen der Befestigungsschrauben, mit welchen das Kraftfahrzeugrad am Fahrzeug befestigt ist, abzustützen. Beim Drehen des Betätigungsteiles 6 werden über die Hebel 8 auf den Träger 6 Reaktionskräfte ausgeübt, welche den Träger 1 mit seiner Achse 9 bezüglich der Radachse ausrichten. Auch hierdurch erfolgt allein durch Drehung des Betätigungsteiles 6 eine dann selbsttätig ablaufende Zentrierung des Trägers 1 am Kraftfahrzeugrad.

Der für die Zentrierung des Trägers erforderliche gespannte Zustand der Befestigungsmittel 2 kann durch Arretierung der Befestigungsmittel an der Führungseinrichtung, beispielsweise durch Festziehen der Sicherungsteile 14 an der Scheibe 3 beim Ausführungsbeispiel der Fig. 2 aufrecht erhalten werden. Es ist jedoch auch möglich, die Scheibe 3 bzw. das Betätigungsteil 6 gegen Rückdrehung durch eine lösbare Sperre zu sichern.

## Patentansprüche

1. Adapter zum Befestigen wenigstens einer Meßeinrichtung oder wenigstens eines zu einer Meßeinrichtung gehörigen Meßelementes an einem Kraftfahrzeugrad mit einem bestimmten Lagebezug zur Radachse mittels eines Trägers für die Meßeinrichtung oder das Meßelement, mit am Träger verschiebbar gelagerten Befestigungsmitteln, mit denen der Träger am Scheibenrad des Fahrzeugrades befestigt wird, und einer Führungseinrichtung, durch welche die Befestigungsmittel gegenüber dem Träger verschiebbar geführt sind, wobei zur Erzeugung von den Träger bezüglich der Radachse zentrierenden Reaktionskräften die Befestigungsmittel durch gemeinsame Bewegung am Scheibenrad festspannbar sind,
dadurch **gekennzeichnet,**
daß die Befestigungsmittel (2) in zu radialen Richtungen im Winkel verlaufenden Richtungen am Träger (1) verschiebbar geführt sind.

2. Adapter nach Anspruch 1, dadurch gekennzeichnet, daß die Befestigungsmittel (2) durch die Führungseinrichtung (3, 4; 6 bis 8) geradlinig oder bogenförmig am Träger (1) geführt sind.

3. Adapter nach Anspruch 1 oder 2, dadurch gekennzeichnet, daß die Führungseinrichtung (3, 4; 6 bis 8) ein am Träger (1) drehbar gelagertes Betätigungsteil (3; 6) aufweist, bei dessen Drehung gegenüber dem Träger (1) die Befestigungsmittel (2) in den gespannten Zustand führbar sind.

4. Adapter nach einem der Ansprüche 1 bis 3, dadurch gekennzeichnet, daß die Befestigungsmittel (2) an Schraubköpfen (5) von Befestigungsschrauben, mit welchen das Kraftfahrzeugrad am Fahrzeug befestigt ist, mit Formschluß aufsetzbar sind.

5. Adapter nach Anspruch 3, dadurch gekennzeichnet, daß die Befestigungsmittel (2) durch das Betätigungsteil (3; 6) gleichzeitig bewegbar sind.

6. Adapter nach einem der Ansprüche 3 bis 5, dadurch gekennzeichnet, daß das Betätigungsteil (3; 6) um eine mit der Radachse ausrichtbare Achse (9) drehbar ist.

7. Adapter nach einem der Ansprüche 3 bis 6, dadurch gekennzeichnet, daß das Betätigungsteil (3) schräg zu den radialen Richtungen verlaufende Führungsschlitze (4) besitzt, in denen die Befestigungsmittel (2) verschiebbar geführt sind.

8. Adapter nach Anspruch 7, dadurch gekennzeichnet, daß die Führungsschlitze (4) geradlinig oder bogenförmig ausgebildet sind.

9. Adapter nach einem der Ansprüche 3 bis 8, dadurch gekennzeichnet, daß das Betätigungsteil (3) als Scheibe ausgebildet ist.

10. Adapter nach einem der Ansprüch 1 bis 6, dadurch gekennzeichnet, daß die Befestigungsmittel (2) jeweils um Schwenkachsen (10) schwenkbar am Träger (1) gelagert sind.

11. Adapter nach Anspruch 10, dadurch gekennzeichnet, daß die Schwenkachsen (10) auf einem Kreis um die mit der Radachse ausrichtbare Achse (9) liegen.

12. Adapter nach einem der Ansprüche 3 bis 6 und 10, 11, dadurch gekennzeichnet, daß das Betätigungsteil (6) an Anlenkstellen (7), die außerhalb der Schwenkachsen (5) liegen, mit den Befestigungsmitteln (2) verbunden ist.

13. Adapter nach Anspruch 12, dadurch gekennzeichnet, daß die Anlenkstellen (7) auf einem Kreis um die mit der Radachse ausrichtbare Achse (9) liegen.

14. Adapter nach einem der Ansprüche 10 bis 13, dadurch gekennzeichnet, daß die Befestigungsmittel (2) auf um die Schwenkachse schwenkbaren Hebeln (8) befestigt sind.

15. Adapter nach einem der Ansprüche 1 bis 14, dadurch gekennzeichnet, daß die Befestigungsmittel (2) im gespannten Zustand auf einem Kreis liegen und voneinander gleiche Winkelabstände aufweisen.

16. Adapter nach einem der Ansprüche 1 bis 15, dadurch gekennzeichnet, daß die Befestigungsmittel (2) lösbar in ihren Befestigungsstellen am Träger (1) vorgesehen sind.
